# EUROPÄISCHE PATENTSCHRIFT

(11) **EP 2 615 953 B1**
(45) Veröffentlichungstag und Bekanntmachung des Hinweises auf die Patenterteilung: **21.01.2015**
(21) Anmeldenummer: 11770046.8
(22) Anmeldetag: 13.09.2011
(51) Int. Cl.: A47J 36/24, A47J 36/28, A47J 36/30

(54) **KOCHEINRICHTUNG FÜR DIE VAKUUMIERTECHNIK**
COOKING DEVICE FOR THE VACUUM COOKING METHOD
APPAREIL DE CUISSON POUR LA CUISSON SOUS VIDE

(30) Priorität: 17.09.2010 DE 202010012775 U
(43) Veröffentlichungstag der Anmeldung: 24.07.2013
(73) Patentinhaber: Braukmann, Bernd, 59757 Arnsberg (DE)
(72) Erfinder: Braukmann, Bernd, 59757 Arnsberg (DE)
(74) Vertreter: Meinke, Dabringhaus und Partner GbR
(86) Internationale Anmeldenummer: PCT/EP2011/004584
(87) Internationale Veröffentlichungsnummer: WO 2012/034678

(56) Entgegenhaltungen:
- DE-A1- 1 411 560
- DE-U1- 20 217 343
- DE-U1- 29 921 742
- US-A- 4 390 551

## Beschreibung

Die Erfindung richtet sich auf eine Vorrichtung zum Zubereiten von Speisen nach der Sous-Vide-Methode (Vakuumiertechnik), wobei die Speisen von einem Vakuumbeutel umschlossen sind.

Üblicherweise werden Speisen durch unterschiedliche Methoden für den menschlichen Verzehr zubereitet, etwa durch Garen, Braten oder Kochen, wobei Öfen, Mikrowellen, Dampfgarer u. dgl. als Zubereitungsgeräte zur Verfügung stehen. Diese Geräte haben einen definierten Garraum, wobei diese Garräume die Größe der Aufnahmebehälter für die zuzubereitenden Speisen auf deren Innenmaß begrenzen.

Aus der DE 14 11 560 A1 ist es bekannt, in unterschiedlich gestalteten Behältern z.B. Lebensmittel einzubringen, wobei die Behälter mit Heizeinrichtungen zur Erwärmung der Lebensmittel versehen sind. Die Behälter können dabei auch mit einem gegenüber der Umgebung niedrigeren Druck vor der Erwärmung ausgerüstet sein, wobei es sich beispielsweise um vakuumdichte Aluminiumfoliengehäuse handeln kann. Warmhaltevorrichtungen für Speisen und Behälter zeigen auch die DE 202 17 343 U1, DE 299 21 742 U1 und die US 4 390 551 A.

Bei der Speisezubereitung mit Hilfe des Sous-Vide-Garens werden die Speisen in Vakuumbeutel einschließlich der Gewürze eingebracht und nach Entfernen der Luft aus dem Beutel werden die Beutel in einem Wasserbad (Bain-Marie) über eine gewisse Zeit auf Gartemperatur gehalten.

Bei allen Zubereitungsmethoden werden gewisse Nachteile in Kauf genommen. So ist der zur Verfügung stehende Garraum häufig nicht auf die Größe des Gargutes abgestimmt, so dass relativ viel Energie verschwendet wird. Die Regelung der Temperatur ist häufig nicht genau genug oder äußerst aufwendig, wobei das reine Kochen in Wasser mit einem Verlust an Vitaminen einhergeht. Bei Kochen in heißer Luft oxidiert die Oberfläche des Gargutes. Auch hier gehen Vitamine, Farbstoffe und Aromen verloren.

Häufig ziehen diese Zubereitungsmethoden auch eine aufwendige Reinigung der entsprechenden Geräte nach sich.

Hier setzt die Erfindung an, deren Aufgabe darin besteht, eine Vorrichtung zur optimalen Zubereitung von Speisen nach der Sous-Vide-Methode bereitzustellen.

Mit einer Vorrichtung der eingangs bezeichneten Art wird diese Aufgabe gemäß der Erfindung dadurch gelöst, dass das Heizelement als Heizfolie bzw.-decke oder als Heizgel ausgebildet ist, wobei ein Ventil zum Luftraum zwischen Heizfolie oder Heizgel einerseits und Gargut-Vakuumbeutel andererseits zur Entfernung von Restluft vorgesehen ist.

Das Umschließen eines Vakuumbeutels mit dem entsprechenden Gargut mittels einer Heizfolie bzw. mit einem Heizgel hat eine Fülle von Vorteilen, da sie formschlüssig den Vakuumbeutel umschließt. Es lässt sich ein sehr gleichmäßiges Garen bei minimalem Energieaufwand betreiben. Hinzu kommt ein geringer Platzbedarf, eine sichere, einfache Bedienung und Steuerung der Temperatur sowie ein flexibler Einsatzbereich und eine äußerst einfache Reinigung.

Ausgestaltungen der Erfindung ergeben sich aus den Unteransprüchen. Dabei kann vorgesehen sein, dass das Heizelement zusätzlich von einem Isolierkörper umschlossen ist. Bei einem derartigen Isolierkörper kann wiederum eine Wärmeisoliertasche oder ein Wärmeisolierbeutel vorgesehen sein mit den oben auch für die Heizfolie selbst beschriebenen Vorteilen.

Erfindungsgemäß ist die Heizfolie mit einem eigenen Temperaturregler und/ oder einer Zeitschaltuhr ausgerüstet ist, wobei in weiterer Ausgestaltung nach der Erfindung auch ein die Kerntemperatur im Gargut messendes Thermometer vorgesehen sein kann.

Wird zur Erwärmung des Gargut-Vakuumbeutels ein Heizgel eingesetzt, so sieht die Erfindung vor, dass dieses Heizgel in einer eigenen Umhüllung untergebracht ist. Diese Umhüllung kann so gestaltet sein, dass sie nach hermetischem Umschließen des Gargutbeutels verschließbar ist.

Da bei der Herstellung der Gargutbeutel ein Vakuumiergerät zur Verfügung steht, kann dieses auch dazu eingesetzt werden, die möglicherweise noch vorhandenen Lufträume zwischen Gargutbeutel und Heizgelbeutel andererseits zu entfernen. Hierzu sieht die Erfindung vor, dass ein Ventil zum Luftraum zwischen Heizfolie und Heizgel einerseits und dem Gargutbeutel andererseits zur Entfernung von Restluft vorgesehen ist.

Natürlich ist, wie schon bei der Heizfolie, beim Heizgel ein Temperaturregler und eine Zeitschaltuhr oder ein die Kerntemperatur messendes Thermometer einzeln oder insgesamt vorgesehen.

Weitere Merkmale, Einzelheiten und Vorteile der Erfindung ergeben sich aus der nachfolgenden Beschreibung sowie anhand der Zeichnung. Diese zeigt in
- Fig. 1: eine vereinfachte Explosionsdarstellung der erfindungsgemäßen Vorrichtung sowie in den
- Fig. 2 bis 4: Schnittdarstellungen durch die erfindungsgemäße Vorrichtung in unterschiedlichen Ausgestaltungen.

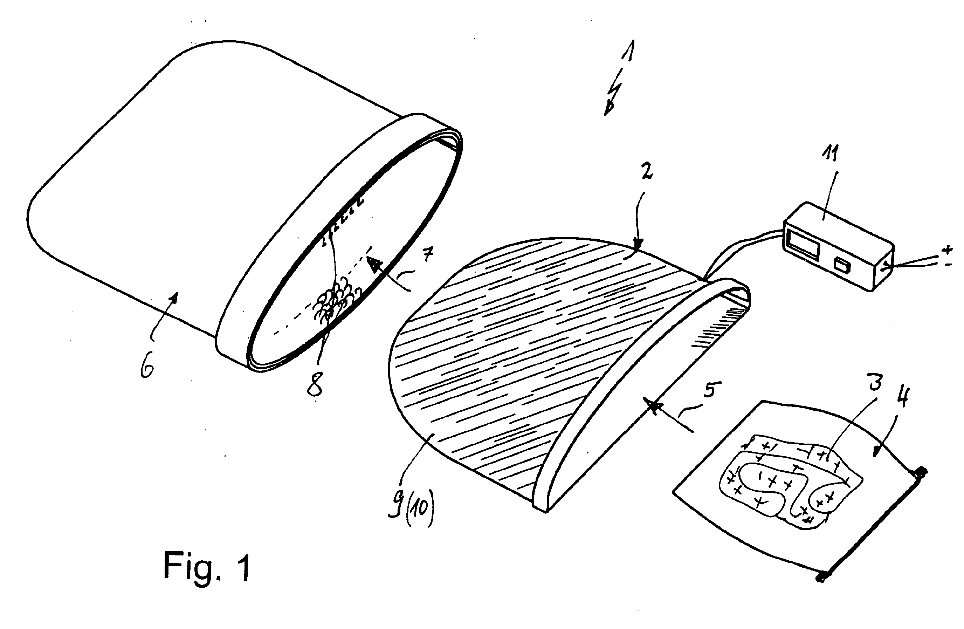

Die allgemein mit 1 bezeichnete erfindungsgemäße Vorrichtung wird von einem im Wesentlichen elastischen Heizelement 2 zum Aufheizen von Gargut 3 in einem Vakuumbeutel 4 gebildet. In der Gebrauchslage, d.h. bei der Zubereitung der Speisen, steckt der Vakuumbeutel 4 in dem Heizelement 2, was in Fig. 1 durch einen Pfeil 5 angedeutet ist. Das Heizelement 2 wird dann in einen Isolierkörper 6 eingeschoben, dies ist durch einen Pfeil 7 angedeutet, wobei daran anschließend der Isolierkörper z.B. mittels eines Klettverschlusses 8 verschlossen wird. Das Heizelement 2 kann als Heizfolie oder Heizdecke gestaltet sein oder auch von einem Heizgel gebildet werden, wobei im Folgenden die Heizfolie mit 9 und das Heizgel mit 10 bezeichnet ist.

Das Heizelement, z.B. die Heizfolie 9, ist mit einem Temperaturregler 11 verbunden. Dieses Element 11 kann auch eine Zeitschaltuhr mit umfassen.

In den vereinfacht wiedergegebenen Schnittzeichnungen sind die einzelnen Elemente wiederum stark vereinfacht wiedergegeben.

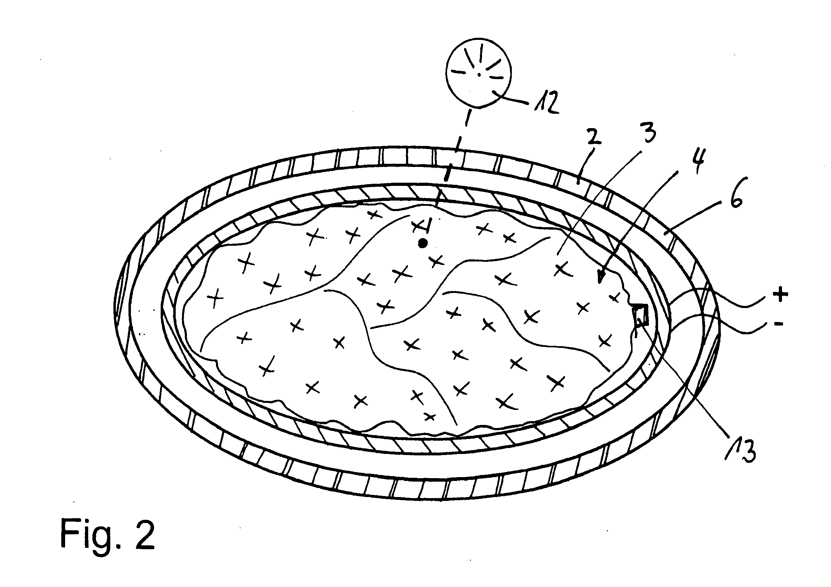

In Fig. 2 ist noch symbolisch ein Thermometer 12 zur Messung der Kerntemperatur des Gargutes angedeutet. Die jeweiligen Anschlüsse zum Absaugen der Luft sind wiederum nur symbolisch angedeutet und bei dem Gargutbeutel mit 13 bezeichnet. Die elektrischen Anschlüsse sind nur symbolisch mit "+/-" bezeichnet.

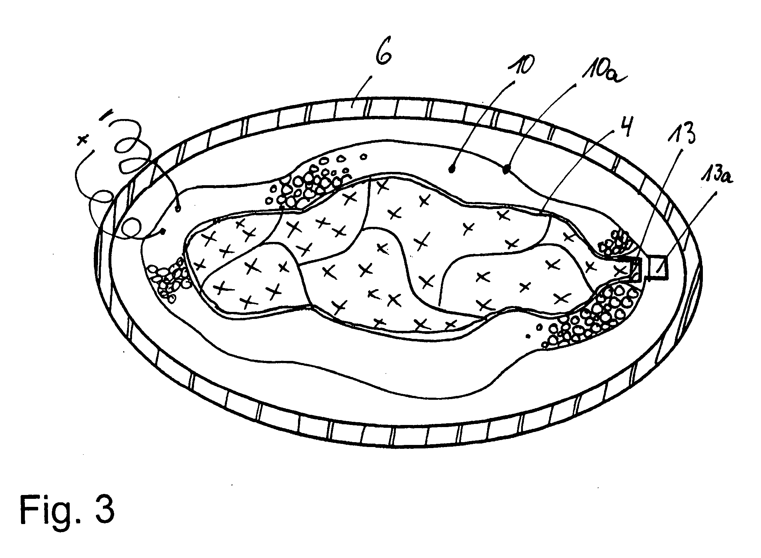

In Fig. 3 ist eine Variante dargestellt mit einem das Gargut umschließenden Heizgel 10 in einem entsprechenden Beutel 10a. Dieser das Heizgel aufnehmende Beutel 10a kann so gestaltet sein, dass er ebenfalls mit einem Ventil 13a oder einem vergleichbaren Element ausgerüstet ist, um eine Vakuumquelle dort anzuschließen, damit diese die Restluft zwischen dem Vakuumbeutel 4 einerseits und dem das Heizgel umschließenden Beutel 10a andererseits absaugen kann.

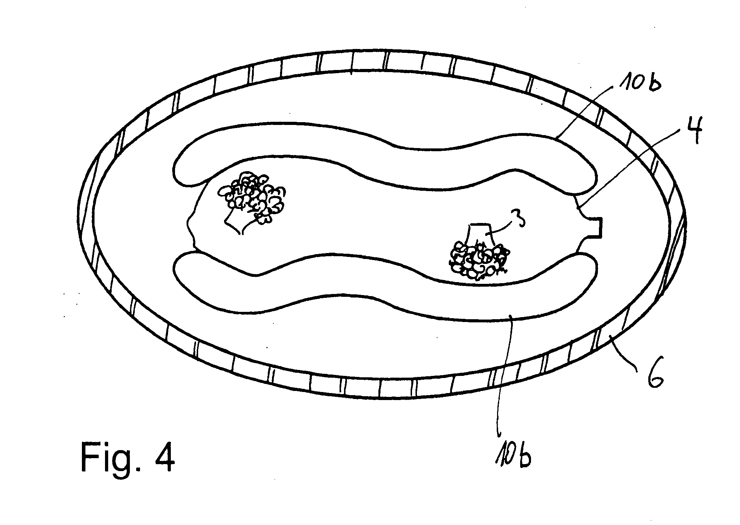

In Fig. 4 ist eine Variante dergestalt dargestellt, dass dort beispielsweise zwei Flachbeutel 10b mit Heizgel das im Vakuumbeutel 4 verbackte Gargut 3 umschließen.

Natürlich sind die beschriebenen Ausführungsbeispiele der Erfindung noch in vielfacher Hinsicht abzuändern, ohne den Grundgedanken zu verlassen. So ist die Erfindung nicht auf die besondere Gestaltung und den Zuschnitt der Heizfolie bzw. der Heizdecke 9 beschränkt, ebenso nicht auf die Ausgestaltung der Aufnahmebeutel 10a für das Heizgel 10, auch die Anschlüsse für die jeweilige Vakuumquelle können anders als dargestellt gestaltet sein, dies gilt auch für die Gestaltung des die Heizfolie umschließenden Isolierkörpers. Natürlich kann auch in nicht vakuumierten Beuteln nach der Erfindung gegart werden, wenn die Luft aus dem Beutel herausgedrückt und der Beutel dicht verschlossen wurde, z.B. in einem Gefrierbeutel.

## Patentansprüche

1. Vorrichtung (1) zum Zubereiten von Speisen nach der Sous-Vide-Methode (Vakuumiertechnik), wobei die Speisen bzw. das Gargut (3) von einem Vakuumbeutel umschlossen sind,
mit einem den Vakuumbeutel (4) des Gargutes (3) umschließenden Heizelement (2),
**dadurch gekennzeichnet,**
**dass** das Heizelement (2) als Heizfolie bzw.-decke (9) oder als Heizgel (10) ausgebildet ist, wobei ein Ventil (13a) zum Luftraum zwischen Heizfolie (9) oder Heizgel (10) einerseits und Gargut-Vakuumbeutel (4) andererseits zur Entfernung von Restluft vorgesehen ist.

2. Vorrichtung nach Anspruch 1,
**dadurch gekennzeichnet,**
**dass** das Heizelement (2) von einem Isolierkörper (6) umschlossen ist.

3. Vorrichtung nach Anspruch 1 oder 2,
**dadurch gekennzeichnet,**
**dass** die Heizfolie (9) mit einem Temperaturregler (11) ausgerüstet ist.

4. Vorrichtung nach einem oder mehreren der Ansprüche 1 bis 3,
**dadurch gekennzeichnet,**
**dass** die Heizfolie (9) mit einer Zeitschaltuhr ausgerüstet ist.

5. Vorrichtung nach einem oder mehreren der Ansprüche 1 bis 4,
**gekennzeichnet durch**
ein die Kerntemperatur im Gargut messendes Thermometer (12).

6. Vorrichtung nach Anspruch 1 oder einem der Ansprüche 2 bis 5,
**dadurch gekennzeichnet,**
**dass** das Heizgel (10) in einer Umhüllung (10a) untergebracht ist.

7. Vorrichtung nach einem oder mehreren der Ansprüche 1 bis 6,
**dadurch gekennzeichnet,**
**dass** die Umhüllung (10a) des Heizgeles nach Einbringen des Gargutbeutels (4) hermetisch verschließbar ist.

## Claims

1. Device (1) for preparing dishes by the *"sous vide"* method (vacuum technique), the dish or the food (3) being contained in a vacuum bag, said device having a heating element (2) that surrounds the vacuum bag (4) containing the food (3),
**characterised in that**
the heating element (2) is embodied as a heating film or blanket (9) or as a heating gel (10), a valve (13a) being provided for the air space between the heating film (9) or heating gel (10), on the one hand, and the food-containing vacuum bag (4), on the other hand, for the elimination of residual air.

2. Device according to claim 1, **characterised in that** the heating element (2) is surrounded by an insulating body (6).

3. Device according to claim 1 or 2, **characterised in that** the heating film (9) is equipped with a temperature regulator (11).

4. Device according to one or more of claims 1 to 3, **characterised in that** the heating film (9) is equipped with a clock timer.

5. Device according to one or more of claims 1 to 4, **characterised by** a thermometer (12) which measures the core temperature of the food.

6. Device according to claim 1 or one of claims 2 to 5, **characterised in that** the heating gel (10) is enclosed in an envelope (10a).

7. Device according to one or more of claims 1 to 6, **characterised in that** the envelope (10a) containing the heating gel can be hermetically sealed after the introduction of the food bag (4).

## Revendications

1. Dispositif (1) pour la préparation de plats selon la méthode sous vide (technique de mise sous vide), où les plats ou les aliments à cuire (3) sont entourés d'un sachet sous vide,
avec un élément chauffant (2) entourant le sachet sous vide (4) des aliments à cuire (3),
**caractérisé en ce**
**que** l'élément chauffant (2) est réalisé comme un film ou un revêtement chauffant (9) ou comme un gel chauffant (10), où une soupape (13a) pour le vide d'air entre le film chauffant (9) ou le gel chauffant (10) d'une part et le sachet sous vide des aliments à cuire (4) d'autre part pour le retrait de l'air restant est fournie.

2. Dispositif selon la revendication 1,
**caractérisé en ce**
**que** l'élément chauffant (2) est entouré d'un corps isolant (6).

3. Dispositif selon la revendication 1 ou 2,
**caractérisé en ce**
**que** le film chauffant (9) est équipé d'un régulateur de température (11).

4. Dispositif selon l'une ou plusieurs des revendications 1 à 3,
**caractérisé en ce**
**que** le film chauffant (9) est équipé d'une minuterie.

5. Dispositif selon l'une ou plusieurs des revendications 1 à 4,
**caractérisé par**
un thermomètre (12) mesurant la température au sein des aliments à cuire.

6. Dispositif selon la revendication 1 ou l'une quelconque des revendications 2 à 5,
**caractérisé en ce**
**que** le gel chauffant (10) est logé dans une enveloppe (10a).

7. Dispositif selon l'une ou plusieurs des revendications 1 à 6,
**caractérisé en ce**
**que** l'enveloppe (10a) du gel chauffant peut être refermée hermétiquement après l'introduction du sachet des aliments à cuire,(4).
